(19) Europäisches Patentamt
European Patent Office
Office européen des brevets

(11) **EP 3 076 575 A1**

(12) **EUROPEAN PATENT APPLICATION**

(43) Date of publication:
**05.10.2016 Bulletin 2016/40**

(51) Int Cl.:
*H04J 14/02* (2006.01)   *H04Q 11/00* (2006.01)

(21) Application number: **15305464.8**

(22) Date of filing: **31.03.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **ALCATEL LUCENT
92100 Boulogne-Billancourt (FR)**

(72) Inventors:
• **Kozicki, Bartlomiej
2018 Antwerp (BE)**
• **Oberle, Karsten
70435 Stuttgart (DE)**

(74) Representative: **D'Halleweyn, Nele Veerle Trees
Gertrudis et al
Arnold & Siedsma
Bezuidenhoutseweg 57
2594 AC The Hague (NL)**

(54) **AN OPTICAL COMMUNICATION DISTRIBUTION SYSTEM AND METHOD FOR PASSIVE OPTICAL NETWORKS**

(57)   An optical communication distribution system, comprising at least a first and a second service provider, each configured for transmitting an optical signal which comprises at least two optical sub-signals, which are based on two different wavelengths, to a distributor. The distributor is configured for
splitting each optical signal into at least said two optical sub-signals; recombining at least said four optical sub-signals into at least a first and a second recombined optical signal such that the first recombined optical signal and the second recombined optical signal each comprise at least two optical sub-signals which are based on different wavelengths of which one optical sub-signal originates from the first service provider and one optical sub-signal originates from the second service provider; and outputting said first and second recombined optical signal to respectively a first and a second optical distribution network.

FIG. 1

**Description**

Field of Invention

Embodiments of the invention relate to the field of passive optical networks, and in particular to an optical communication distribution system and method for connecting a plurality of service providers to a plurality of optical distribution networks.

Background

In passive optical networks such as the next-generation passive optical network (NG-PON2), high speed data connectivity is delivered to customers over optical fiber, which carries multiple wavelengths to achieve high capacity.
The deployment of an optical access network is associated with a very high cost, and the provider of optical distribution network (ODN) infrastructure can recuperate the investment by increasing the utilization of the fiber resources. The utilization can be boosted by increasing the number of customers served by the network. The latter can be achieved by opening the optical infrastructure to multiple network operators. Such act is referred to as unbundling.
Unbundling can be realized at the level of electrical multiplexing (bit stream unbundling), which provides data access with limited control over the parameters of data delivery. However, it is desirable to network operators to have full control over how the customers are reached and therefore unbundling at the physical/optical fiber layer is often preferred.

Summary

For physical unbundling one of the problems is the efficient provisioning of network resources from all network operators to all customer. Four known prior art solutions can be distinguished:

**Solution 1: Wavelength per service provider**

Wavelengths are assigned to service/network providers. This approach gives the most control to the network operator but limits the scalability of the solution because of the availability of the limited number of wavelength channels - and consequently - limited number of different network operators. Wavelength collisions may occur as multiple network providers can operate on the same wavelength.

**Solution 2: Wavelength per service type**

Wavelengths are assigned to the service type. This approach requires multiplexing each of the service types in the electrical domain and effectively resulting in bit stream unbundling per service.

**Solution 3: Shared wavelength**

Wavelengths for bandwidth management, shared across service providers, carrying all service types. Solution 3 is bit stream unbundling combined for all services, with the associated limitation in control.

**Solution 4: Wavelength per user**

Wavelengths are assigned to users. This approach is again very limiting in terms of scalability due to the limited number of wavelengths available in the PON system.
The object of embodiments of the invention is to provide an optical communication distribution system and method which allows any customer to connect to any desired service provider. Embodiments of the invention aim to provide an optical communication distribution system and method, which ensures scalability of physical unbundling while allowing control over the delivery of data to the customer.
According to a first aspect of the invention there is provided an optical communication distribution system, comprising a distributor configured for connecting at least a first and a second service provider (SP) to at least a first and a second optical distribution network (ODN), wherein:

the first service provider is configured for transmitting a first optical signal, comprising at least a first optical sub-signal based on a first wavelength and a second optical sub-signal based on a second wavelength, to the distributor; the second service provider is configured for transmitting a second optical signal, comprising at least a third optical sub-signal based on a third wavelength and a fourth optical sub-signal based on a fourth wavelength, to the distributor; the distributor is configured for

splitting the first optical signal into at least said first optical sub-signal and said second optical sub-signal;

splitting the second optical signal into at least said third optical sub-signal and said fourth optical sub-signal;

recombining at least said first, second, third and fourth optical sub-signals into at least a first and a second recombined optical signal such that the first recombined optical signal and the second recombined optical signal each comprise at least two optical sub-signals which are based on different wavelengths of which one optical sub-signal originating from the first service provider and one optical sub-signal originating from the second service provider;

outputting said first recombined optical signal to said first optical distribution network; and

outputting said second recombined optical signal to said second optical distribution network.

Embodiments of the invention are based *inter alia* on the inventive insight that by having multiple service providers transmitting optical signals, which comprise multiple sub-signals based on different wavelengths, and a distributor which consequently splits the optical signals, recombines the optical sub-signals and outputs the recombined optical signals in a manner as stated above, multiple service provider can be connected to multiple optical distribution networks. Moreover, service providers are connected to multiple optical distribution networks in such a way that taking into account one service provider, each transmitted optical sub-signal is output to a different optical distribution network. Taking into account one optical distribution network, optical sub-signals from multiple service providers are output to the optical distribution network, with the optical sub-signals being based on mutually different wavelengths. In other words, the distributor distributes incoming optical sub-signals, comprised in optical signals, in a circular fashion. This way it is possible to achieve connectivity between any service provider and any optical distribution network. By using the proposed system, it is possible to assure nearly full capacity per wavelength in each optical distribution network for each of the service providers, while avoiding any possibility of wavelength collision as opposed to e.g. prior art solution 1 as discussed above. Furthermore, the proposed system enables a reduction of required fiber deployments in the last mile as not for every service provider an optical distribution network is required.

The term optical sub-signal is used to refer to a signal which is based on one particular wavelength. The term optical signal is used to refer to a 'collection' of optical sub-signals. It is clear to the skilled person that multiple optical sub-signals can be multiplexed into one optical signal and that said optical signal can be de-multiplexed into said multiple optical sub-signals.

According to a preferred embodiment said first wavelength and said third wavelength are substantially equal.

It is assumed for the remainder of this text that wavelengths are considered to be substantially equal when they are equal to each other apart from a deviation which is determined by the precision of the distributor. In other words, substantially equal wavelengths will be treated in the same manner by the distributor.

When two service providers use optical sub-signals which are based on the same wavelength, a full capacity per wavelength in each optical distribution network is assured. The distributor is configured to make sure that no optical sub-signals based on the same wavelength are output to one and the same optical distribution network. When two service providers use optical sub-signals which are based on substantially equal wavelengths, it is assured that no wavelength bands are neglected within an optical distribution network. When service providers would use all different wavelengths, some of the bands within an optical distribution network would remain unused.

According to a preferred embodiment said second wavelength and said fourth wavelength are substantially equal.

In a previous paragraph, the advantages of the use of substantially equal first and third wavelengths are elaborated on. In a similar way, service providers using substantially equal second and fourth wavelengths offers the same benefits. It is clear to the skilled person that the system can comprise more than two service providers, each of them transmitting optical signals comprising more than two optical sub-signals based on different wavelengths, being connected to more than two optical distribution networks. In such a case, the skilled person understands that the above described benefits can be achieved when each of the service providers uses the same set of wavelengths for transmitting optical signals.

According to an embodiment of the invention, the distributor comprises a passive optical element. The use of a passive optical element guarantees a high reliability, low cost and low maintenance.

According to an embodiment the passive optical element is an arrayed waveguide grating. An arrayed waveguide grating is a passive wavelength selective element, which is able to perform the functionality of the distributor as described earlier. It is clear to the skilled person that arrayed waveguide gratings can comprise two optical star couplers, one on the input side and one on the output side of the arrayed waveguide grating, which are connected by means of an array of waveguides of linearly progressively increasing path length.

According to an embodiment wherein the distributor comprises an arrayed waveguide grating, wavelengths are considered to be substantially equal when they are equal to each other apart from a deviation which is determined by the precision of the arrayed waveguide grating.

According to a further developed embodiment, the first optical distribution network comprises at least one optical network unit configured for tuning to at least one optical sub-signal which is comprised in said first recombined optical signal.

By providing at least one optical network unit, a customer on the first optical distribution network can access any of the network providers by selecting from the first recombined optical signal the appropriate wavelength corresponding with the optical sub-signal originating from the network provider of choice.

According to a preferred embodiment, the second optical distribution network comprises at least one optical network unit configured for tuning to at least one optical sub-signal which is comprised in said second recombined optical signal.

In a similar manner as described above for the first optical distribution network, a customer on the second optical distribution network can access any of the network providers by selecting from the second recombined optical signal the appropriate wavelength corresponding with the optical sub-signal originating from the network provider of choice. The skilled person understands that due to the functionality of the distributor, customers on different optical distribution networks will have to select a different wavelength to get access to content of the same service provider.

The skilled person understands that the above described optical network unit can be a multi-wavelength optical network unit, allowing a customer to potentially receive at the same time traffic from different providers, e.g. different services from other providers.

According to a further developed embodiment, the distributor is configured for recombining at least said first, second, third and fourth optical sub-signals into at least a first and a second recombined optical signal based on following formula:

$$ODN(N) = \sum_{i=1}^{X} SP(i), \lambda(mod_X(N + i - 2) + 1);$$

wherein:

ODN(N) denotes the $N^{th}$ recombined signal, output to the $N^{th}$ optical distribution network;

X denotes a total amount of service providers and SP(i) denotes the $i^{th}$ service provider;

$\lambda(Y)$, with Y = $(mod_X(N + i - 2) + 1)$, denotes the $Y^{th}$ wavelength, corresponding with the $Y^{th}$ optical sub-signal, comprised in the $N^{th}$ recombined signal.

This way, each of the service providers is connected to the optical distribution networks through a distributor which provides a cyclic wavelength distribution such that each of the optical distribution networks carries one wavelength from each of the service providers.

The skilled person will understand that the hereinabove described technical considerations and advantages for method embodiments also apply to the below described system embodiments, *mutatis mutandis*.

According to a second aspect of the invention there is provided distribution method in an optical communication system, using at least a first and a second service provider, a distributor and at least a first and a second optical distribution network, the distribution method comprising:

transmitting a first optical signal, comprising at least a first optical sub-signal based on a first wavelength and a second optical sub-signal based on a second wavelength, from the first service provider to the distributor;

transmitting a second optical signal, comprising at least a third optical sub-signal based on a third wavelength and a fourth optical sub-signal based on a fourth wavelength, from the second service provider to the distributor;

splitting the first optical signal into at least said first optical sub-signal and said second optical sub-signal;

splitting the second optical signal into at least said third optical sub-signal and said fourth optical sub-signal;

recombining at least said first, second, third and fourth optical sub-signals into at least a first and a second recombined optical signal such that the first recombined optical signal and the second recombined optical signal each comprise at least two optical sub-signals which are based on different wavelengths of which one optical sub-signal originating from the first service provider and one optical sub-signal originating from the second service provider;

outputting said first recombined optical signal to said first optical distribution network; and

outputting said second recombined optical signal to said second optical distribution network.

By transmitting multiple optical signals, which comprise multiple sub-signals based on different wavelengths, and splitting the optical signals, recombining the optical sub-signals and outputting the recombined optical signals according to the method described above, multiple service provider can be connected to multiple optical distribution networks. Moreover, service providers are connected to multiple optical distribution networks in such a way that taking into account one service provider, each transmitted optical sub-signal is output to a different optical distribution network. Taking into account one optical distribution network, optical sub-signals from multiple service providers are output to the optical distribution network, with the optical sub-signals being based on mutually different wavelengths. In other words, distributing incoming optical sub-signals, comprised in optical signals, is carried out in a circular fashion. This way it is possible to achieve connectivity between any service provider and any optical distribution network. By applying the proposed method, it is possible to assure practically full capacity per wavelength in each optical distribution network for each of the service providers, while avoiding any possibility of wavelength collision. Furthermore, the proposed method enables a reduction of required fiber deployments in the last mile as not for every service provider an optical distribution network is required.

According to a preferred embodiment said first wavelength and said third wavelength are substantially equal.

According to an embodiment of the invention, said second wavelength and said fourth wavelength are substantially equal.

According to a further developed embodiment, the distribution method further comprises in said first optical distribution network: tuning to at least one optical sub-signal which is comprised in said first recombined optical signal.

According to a preferred embodiment, the distribution method further comprises in said second optical distribution network: tuning to at least one optical sub-signal which is comprised in said second recombined optical signal.

According to a further developed embodiment of the invention, recombining at least said first, second, third and fourth optical sub-signals into at least a first and a second recombined optical signal is carried out based on following formula:

$$ODN(N) = \sum_{i=1}^{X} SP(i), \lambda(mod_X(N + i - 2) + 1);$$

wherein:

ODN(N) denotes the $N^{th}$ recombined signal, output to the $N^{th}$ optical distribution network;

X denotes a total amount of service providers and SP(i) denotes the $i^{th}$ service provider;

$\lambda(Y)$, with $Y = (mod_X(N + i - 2) + 1)$, denotes the $Y^{th}$ wavelength, corresponding with the $Y^{th}$ optical sub-signal, comprised in the $N^{th}$ recombined signal.

According to a further aspect of the invention, there is provided a computer program product comprising computer-executable instructions for performing the distribution method of any one of the claims 8-14, when the program is run on a computer.

According to a further aspect of the invention, there is provided a computer program comprising computer-executable instructions to perform the method of any one of the claims 8-14, when the program is run on a computer, according to any one of the steps of any one of the embodiments disclosed above.

According to a further aspect of the invention, there is provided a computer device or other hardware device programmed to perform one or more steps of any one of the embodiments of the method disclosed above. According to another aspect there is provided a data storage device encoding a program in machine-readable and machine-executable form to perform one or more steps of any one of the embodiments of the method disclosed above.

Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:

Figure 1 illustrates schematically an embodiment of an exemplary optical communication distribution system according to the invention;

Figure 2 illustrates schematically an embodiment of a further exemplary distribution system according to the invention;

Figure 3 illustrates schematically an embodiment of an exemplary optical communication distribution system according to the invention, wherein the system comprises four service providers and four optical distribution networks;

Figure 4 illustrates schematically an optical network unit comprised in a distribution system according to an embodiment of the invention;

Figure 5 is a flowchart illustrating an embodiment of an exemplary distribution method according to the invention; and

Figure 6 is a flowchart illustrating a further embodiment of an exemplary detection method according to the invention.

Description of embodiments

It is noted that method steps or system parts, which are illustrated with dotted lines represent steps or parts which correspond with specific embodiments of the invention, which may be combined with each other as will be described below.

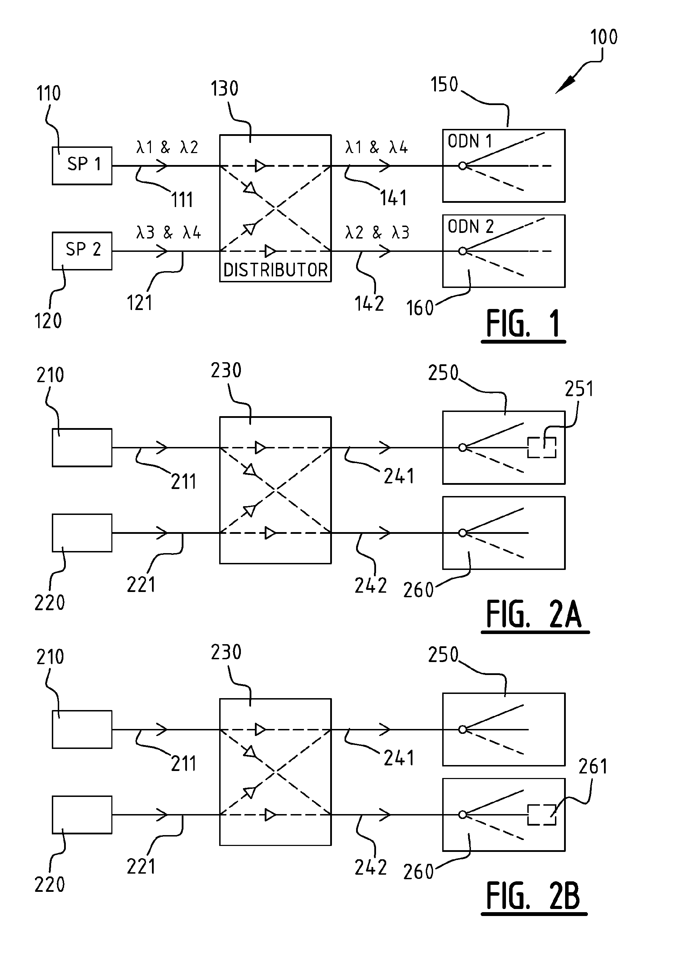

Figure 1 illustrates an optical communication distribution system 100, comprising a distributor 130 configured for connecting at least a first (SP1) 110 and a second service provider (SP2) 120 to at least a first (ODN1) 150 and a second optical distribution network (ODN2) 160. The first service provider 110 is configured for transmitting a first optical signal 111, comprising at least a first optical sub-signal based on a first wavelength ($\lambda$1) and a second optical sub-signal based on a second wavelength ($\lambda$2), to the distributor 130. The second service provider 120 is configured for transmitting a second optical signal 121, comprising at least a third optical sub-signal based on a third wavelength ($\lambda$3) and a fourth optical sub-signal based on a fourth wavelength ($\lambda$4), to the distributor 130. The distributor 130 is configured for splitting the first optical signal into at least said first optical sub-signal and said second optical sub-signal and for splitting the second optical signal into at least said third optical sub-signal and said fourth optical sub-signal. The distributor 130 is further configured for recombining at least said first, second, third and fourth optical sub-signals into at least a first 141 and a second recombined optical signal 142 such that the first recombined optical signal 141 and the second recombined optical signal 142 each comprise at least two optical sub-signals which are based on different wavelengths of which one optical sub-signal originates from the first service provider 110 and one optical sub-signal originates from the second service provider 120. Consequently the distributor 130 is configured for outputting said first recombined optical signal 141 to said first optical distribution network 150 and for outputting said second recombined optical signal 142 to said second optical distribution network 160.

The skilled person understands that for transmitting an optical signal an optical line transceiver can be used. Furthermore it is clear to the skilled person that, while in the above description a one-way route of optical signals and sub-signals is discussed, namely from network/service provider to optical distribution network, the above described can also be used for traffic from the optical distribution network towards the network/service provider. It is common knowledge to use different one set of wavelengths for downstream traffic, and another set of wavelengths for upstream traffic.

According to a preferred embodiment said first wavelength ($\lambda$1) and said third wavelength ($\lambda$3) are substantially equal.

When two service providers use optical sub-signals which are based on the same wavelength, a full capacity per wavelength in each optical distribution network is assured. The distributor 130 is configured to make sure that no optical sub-signals based on the same wavelength are output to one and the same optical distribution network. When two service providers use optical sub-signals which are based on substantially equal wavelengths, it is assured that no wavelength bands are neglected within an optical distribution network. When service providers would use all different wavelengths, some of the bands within an optical distribution network would remain unused.

According to a preferred embodiment said second wavelength ($\lambda$2) and said fourth wavelength ($\lambda$4) are substantially equal.

In a previous paragraph, the advantages of the use of substantially equal first ($\lambda$1) and third ($\lambda$3) wavelengths is elaborated on. In a similar way, service providers using substantially equal second ($\lambda$2) and fourth ($\lambda$4) wavelengths offers the same benefits. It is clear to the skilled person that the system can comprise more than two service providers, each of them transmitting optical signals comprising more than two optical sub-signals based on different wavelengths, being connected to more than two optical distribution networks. In such a case, the skilled person understands that the above described benefits can be achieved when each of the service providers uses the same set of wavelengths for transmitting optical signals.

According to an embodiment of the invention, the distributor comprises a passive optical element. The use of a passive optical element guarantees a high reliability, low cost and low maintenance.

According to an embodiment the passive optical element is an arrayed waveguide grating. An arrayed waveguide grating is a passive wavelength selective element, which is able to perform the functionality of the distributor as described earlier. It is clear to the skilled person that arrayed waveguide gratings can comprise two optical star couplers, one on the input side and one on the output side of the arrayed waveguide grating, which are connected by means of an array of waveguides of linearly progressively increasing path length. In an arrayed waveguide grating incoming optical signals propagate into a first planar region before being coupled into the waveguide array. Then the wave fronts of the optical signals are tilted such that different optical sub-signals, based on different wavelengths, are focused at different locations when the light emerges into a second planar region. When an input optical signal is shifted, the output light will undergo a similar shift. The same set of wavelengths can be used simultaneously at each input port of the arrayed waveguide grating, without the possibility of a wavelength overlap at the output of the arrayed waveguide grating.

According to a further developed embodiment as illustrated in figure 2A, the first optical distribution network 250 comprises at least one optical network unit 251 configured for tuning to at least one optical sub-signal which is comprised in said first recombined optical signal 241.

By providing at least one optical network unit 251, a customer on the first optical distribution network 250 can access any of the network providers by selecting from the first recombined optical signal 241 the appropriate wavelength corresponding with the optical sub-signal originating from the network provider of choice.

According to another embodiment as illustrated in figure 2B, the second optical distribution network 260 comprises at least one optical network unit 261 configured for tuning to at least one optical sub-signal which is comprised in said second recombined optical signal 242.

In a similar manner as described above for the first optical distribution network 251, a customer on the second optical distribution network can access any of the network providers 210, 220 by selecting from the second recombined optical signal 242 the appropriate wavelength λ2 or λ3 corresponding with the optical sub-signal originating from the network provider of choice 210 or 220. The skilled person understands that due to the functionality of the distributor 130, customers on different optical distribution networks will have to select a different wavelength to get access to content of the same service provider.

The skilled person understands that the above described optical network unit can be a multi-wavelength optical network unit, allowing a customer to potentially receive at the same time traffic from different providers, e.g. different services from other providers.

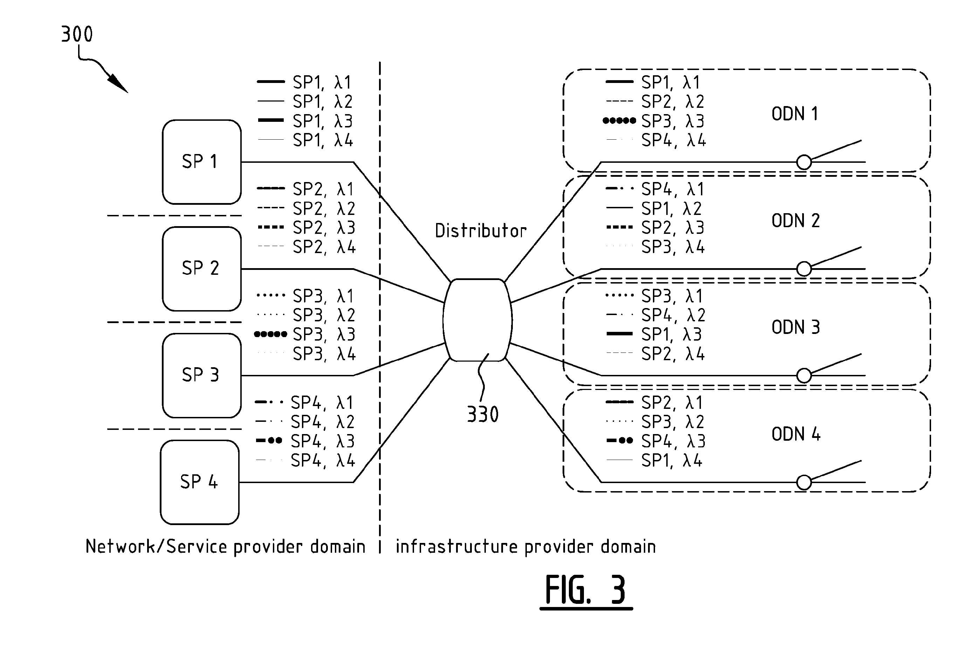

Figure 3 illustrates an embodiment of an exemplary optical communication distribution system 300 according to the invention, wherein the system 300 comprises four service providers (SP1, SP2, SP3 and SP4) and four optical distribution networks (ODN1, ODN2, ODN3 and ODN4), which are all connected to each other through a distributor 330. In other words, the distributor 330 can be seen as a passive optical routing element between multiple network provider domains and multiple optical distribution networks which form the infrastructure provider domain. Figure 3 more specifically depicts a physical unbundling scenario in a passive optical network, where four individual network/service providers (SP1, SP2, SP3 and SP4) are connecting to four distinct optical distribution networks (ODN1, ODN2, ODN3 and ODN4). In this particular scenario four wavelengths (λ1, λ2, λ3 and λ4) are used by each service provider.

According to an embodiment the distributor 330 connects input ports (coming from service providers) to output ports (going to optical distribution networks) in a circular fashion in function of the signal wavelength according to the following formula:

$$ODN(N) = \sum_{i=1}^{X} SP(i), \lambda(mod_X(N + i - 2) + 1);$$

wherein:

ODN(N) denotes the N$^{th}$ recombined signal, output to the N$^{th}$ optical distribution network;

X denotes a total amount of service providers and SP(i) denotes the i$^{th}$ service provider;

λ (Y), with Y = ($mod_X(N + i$ - 2) + 1), denotes the Y$^{th}$ wavelength, corresponding with the Y$^{th}$ optical sub-signal, comprised in the N$^{th}$ recombined signal.

This way, each of the service providers (SP1, SP2, SP3 and SP4) is connected to the optical distribution networks (ODN1, ODN2, ODN3 and ODN4) through a distributor 330 which provides a cyclic wavelength distribution such that each of the optical distribution networks carries one wavelength from each of the service providers as illustrated in the below table:

| ODN1 | SP1, λ1 |
| | SP2, λ2 |
| | SP3, λ3 |
| | SP4, λ4 |
| ODN2 | SP4, λ1 |
| | SP1, λ2 |
| | SP2, λ3 |
| | SP3, λ4 |
| ODN3 | SP3, λ1 |
| | SP4, λ2 |
| | SP1, λ3 |
| | SP2, λ4 |
| ODN4 | SP2, λ1 |
| | SP3, λ2 |
| | SP4, λ3 |
| | SP1, λ4 |

The skilled person understands that although in the previous example four service providers, four optical distribution networks and four different wavelengths were used, the same reasoning applies to systems comprising other amounts of service providers and/or optical distribution networks, wherein another amount of wavelengths is used and that the amount of service providers does not have to equal the amount of optical distribution networks and/or used wavelengths for the distribution system according to the invention to be applied successfully.

In the exemplary embodiment which is illustrated in figure 3, the distributor 330 can be for example an arrayed waveguide grating which performs a cyclic distribution across the four concerning wavelengths. It is clear to the skilled person that depending on the geometry, the distributor 330 or arrayed waveguide grating can perform a cyclic distribution across more wavelengths and that for connecting a larger number of service providers to multiple optical distribution networks, a distributor 330 or arrayed waveguide grating with a broader cycle can be used.

Although the above embodiments emphasize on downstream functionality of the distributor 330, the skilled person understands that the cyclic property of a distributor 330 or arrayed waveguide grating can also be exploited in the upstream direction.

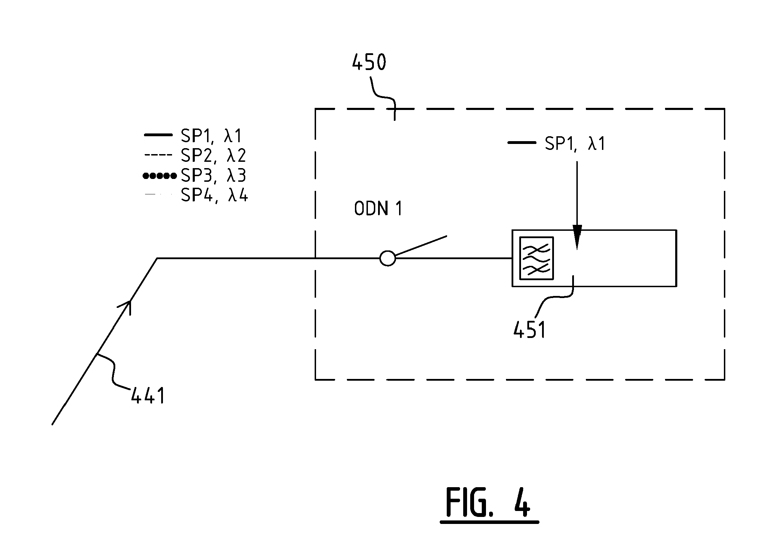

In the context of the above described exemplary embodiment, figure 4 illustrates an optical network unit 451 comprised in the first optical distribution network (ODN1) 450, which is configured for tuning to at least one optical sub-signal (SP1, λ1; SP2, λ2; SP3, λ3 or SP4, λ4) which is comprised in said first recombined optical signal 441. A customer on the first optical distribution network 450 connects to SP1 by tuning the optical filter in the optical network unit to wavelength λ1. It is clear to the skilled person that by extension, on all of the optical distribution networks customers can access any of the network providers by selecting the appropriate wavelength. Furthermore all users can easily switch between providers by lambda switching as in the described exemplary embodiment. Each customer can potentially receive traffic from four different providers on the four different wavelengths just by tuning their optical network unit appropriately.

According to an embodiments of he invention the optical network unit is a multi-wavelength optical network unit, enabling a user to potentially receive at the same time traffic from multiple providers, e.g. different services from different providers.

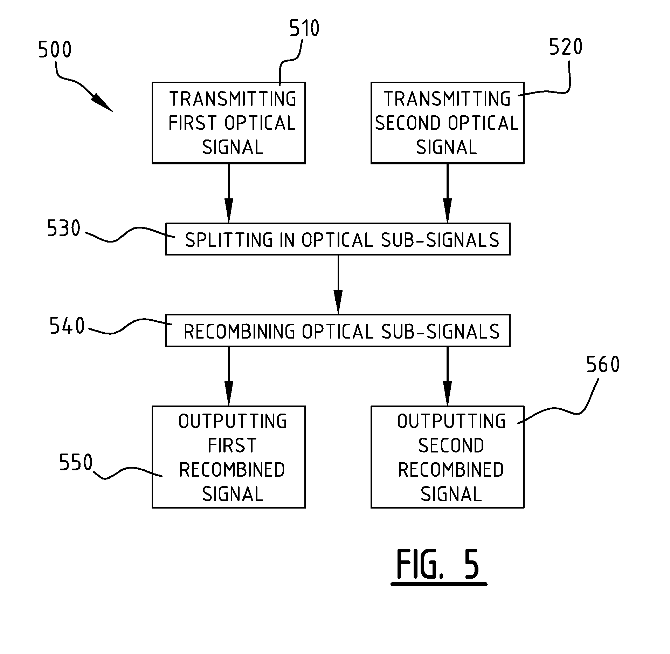

Figure 5 is a flowchart illustrating a distribution method 500 in an optical communication system, using at least a first and a second service provider, a distributor and at least a first and a second optical distribution network. The distribution method 300 comprises a step 510 of transmitting a first optical signal, comprising at least a first optical sub-signal based on a first wavelength and a second optical sub-signal based on a second wavelength, from the first service provider to the distributor and a step 520 of transmitting a second optical signal, comprising at least a third optical sub-signal based on a third wavelength and a fourth optical sub-signal based on a fourth wavelength, from the second service provider to the distributor. The method further comprises steps 530 of splitting the first optical signal into at least said first optical sub-signal and said second optical sub-signal and splitting the second optical signal into at least said third optical sub-signal and said fourth optical sub-signal. Consequently the method comprises a step 540 of recombining at least said first, second, third and fourth optical sub-signals into at least a first and a second recombined optical signal such that the first recombined optical signal and the second recombined optical signal each comprise at least two optical sub-signals which are based on different wavelengths of which one optical sub-signal originating from the first service provider and one optical sub-signal originating from the second service provider. Finally the distribution method comprises a step 550 of outputting said first recombined optical signal to said first optical distribution network; and a step 560 of outputting said second recombined optical signal to said second optical distribution network.

According to a preferred embodiment said first wavelength and said third wavelength are substantially equal.

According to an embodiment of the invention, said second wavelength and said fourth wavelength are substantially equal.

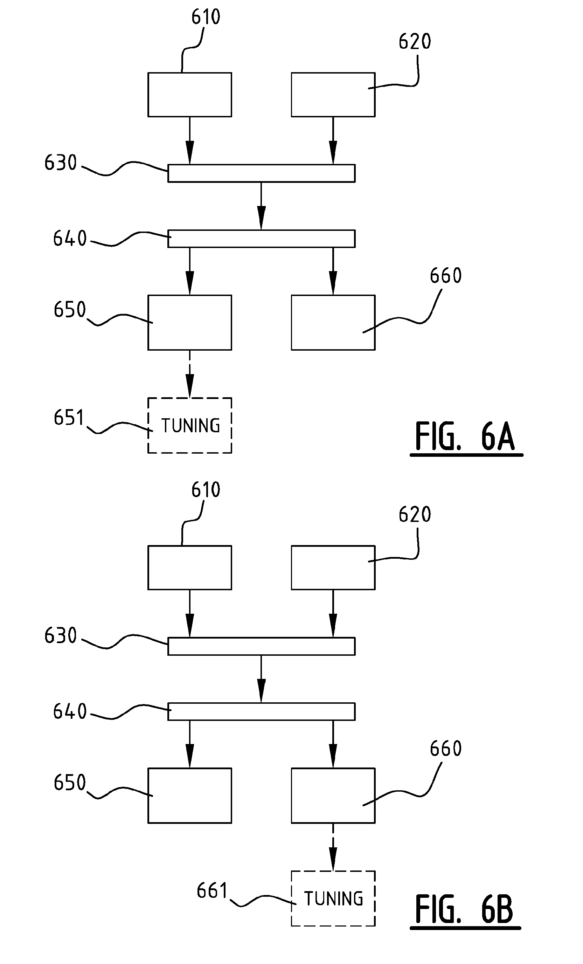

According to a further developed embodiment as illustrated in the flowchart of figure 6A, the distribution method further comprises in said first optical distribution network a step 651 of tuning to at least one optical sub-signal which is comprised in said first recombined optical signal.

According to a preferred embodiment as illustrated in the flowchart of figure 6B, the distribution method further comprises in said second optical distribution network: a step 661 of tuning to at least one optical sub-signal which is comprised in said second recombined optical signal.

According to a further developed embodiment of the invention, recombining at least said first, second, third and fourth optical sub-signals into at least a first and a second recombined optical signal is carried out based on following formula:

$$ODN(N) = \sum_{i=1}^{X} SP(i), \lambda(mod_X(N + i - 2) + 1);$$

wherein:
ODN(N) denotes the $N^{th}$ recombined signal, output to the $N^{th}$ optical distribution network;
X denotes a total amount of service providers and SP(i) denotes the $i^{th}$ service provider;
$\lambda(Y)$, with $Y = (mod_X(N + i - 2) + 1)$, denotes the $Y^{th}$ wavelength, corresponding with the $Y^{th}$ optical sub-signal, comprised in the $N^{th}$ recombined signal.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the figures, including any functional blocks labelled as "processors" or "modules", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Whilst the principles of the invention have been set out above in connection with specific embodiments, it is to be understood that this description is merely made by way of example and not as a limitation of the scope of protection which is determined by the appended claims.

**Claims**

1. An optical communication distribution system, comprising a distributor configured for connecting at least a first and a second service provider to at least a first and a second optical distribution network, wherein:

   the first service provider is configured for transmitting a first optical signal, comprising at least a first optical sub-signal based on a first wavelength and a second optical sub-signal based on a second wavelength, to the distributor;
   the second service provider is configured for transmitting a second optical signal, comprising at least a third optical sub-signal based on a third wavelength and a fourth optical sub-signal based on a fourth wavelength, to the distributor;
   the distributor is configured for
   splitting the first optical signal into at least said first optical sub-signal and said second optical sub-signal;
   splitting the second optical signal into at least said third optical sub-signal and said fourth optical sub-signal;
   recombining at least said first, second, third and fourth optical sub-signals into at least a first and a second recombined optical signal such that the first recombined optical signal and the second recombined optical signal each comprise at least two optical sub-signals which are based on different wavelengths of which one optical sub-signal originating from the first service provider and one optical sub-signal originating from the second service provider;
   outputting said first recombined optical signal to said first optical distribution network; and
   outputting said second recombined optical signal to said second optical distribution network.

2. The distribution system according to claim 1, wherein
said first wavelength and said third wavelength are substantially equal.

3. The distribution system according to claim 1 or 2, wherein
said second wavelength and said fourth wavelength are substantially equal.

4. The distribution system according to any one of the claims 1 to 3, wherein the distributor comprises a passive optical element.

5. The distribution system according to claim 4, wherein said passive optical element is an arrayed waveguide grating.

6. The distribution system according to any one of the preceding claims, wherein
the first optical distribution network comprises at least one optical network unit configured for tuning to at least one optical sub-signal which is comprised in said first recombined optical signal.

7. The distribution system according to any one of the preceding claims, wherein
the second optical distribution network comprises at least one optical network unit configured for tuning to at least one optical sub-signal which is comprised in said second recombined optical signal.

8. The distribution system according to any one of the preceding claims, wherein said distributor is configured for recombining at least said first, second, third and fourth optical sub-signals into at least a first and a second recombined optical signal based on following formula:

$$ODN(N) = \sum_{i=1}^{X} SP(i), \lambda(mod_X(N + i - 2) + 1);$$

wherein:
ODN(N) denotes the $N^{th}$ recombined signal, output to the $N^{th}$ optical distribution network;
X denotes a total amount of service providers and SP(i) denotes the $i^{th}$ service provider;
$\lambda$ (Y), with Y = $(mod_X(N + i - 2) + 1)$, denotes the $Y^{th}$ wavelength, corresponding with the $Y^{th}$ optical sub-signal, comprised in the $N^{th}$ recombined signal.

9. A distribution method in an optical communication system, using at least a first and a second service provider, a distributor and at least a first and a second optical distribution network, the distribution method comprising:

transmitting a first optical signal, comprising at least a first optical sub-signal based on a first wavelength and a second optical sub-signal based on a second wavelength, from the first service provider to the distributor;
transmitting a second optical signal, comprising at least a third optical sub-signal based on a third wavelength and a fourth optical sub-signal based on a fourth wavelength, from the second service provider to the distributor;
splitting the first optical signal into at least said first optical sub-signal and said second optical sub-signal;
splitting the second optical signal into at least said third optical sub-signal and said fourth optical sub-signal;
recombining at least said first, second, third and fourth optical sub-signals into at least a first and a second recombined optical signal such that the first recombined optical signal and the second recombined optical signal each comprise at least two optical sub-signals which are based on different wavelengths of which one optical sub-signal originating from the first service provider and one optical sub-signal originating from the second service provider;
outputting said first recombined optical signal to said first optical distribution network; and
outputting said second recombined optical signal to said second optical distribution network.

10. The distribution method according to claim 9, wherein
said first wavelength and said third wavelength are substantially equal.

11. The distribution method according to claim 9 or 10, wherein
said second wavelength and said fourth wavelength are substantially equal.

12. The distribution method according to any one of the claims 9 to 11, further comprising in said first optical distribution network:

tuning to at least one optical sub-signal which is comprised in said first recombined optical signal.

13. The distribution method according to any one of the claims 9 to 12, further comprising in said second optical distribution network:

   tuning to at least one optical sub-signal which is comprised in said second recombined optical signal.

14. The distribution method according to any one of the claims 9 to 13, wherein recombining at least said first, second, third and fourth optical sub-signals into at least a first and a second recombined optical signal is carried out based on following formula:

$$ODN(N) = \sum_{i=1}^{X} SP(i), \lambda(mod_X(N + i - 2) + 1); \text{ wherein:}$$

   ODN(N) denotes the $N^{th}$ recombined signal, output to the $N^{th}$ optical distribution network;
   X denotes a total amount of service providers and SP(i) denotes the $i^{th}$ service provider;
   $\lambda$ (Y), with Y = $(mod_X(N + i - 2) + 1)$, denotes the $Y^{th}$ wavelength, corresponding with the $Y^{th}$ optical sub-signal, comprised in the $N^{th}$ recombined signal.

15. A computer program product comprising computer-executable instructions for performing the distribution method of any one of the claims 9-14, when the program is run on a computer.

110

130

150

100

SP 1 — λ1 & λ2 → 111 — [DISTRIBUTOR 130] — λ1 & λ4 → 141 — ODN 1 150

SP 2 — λ3 & λ4 → 121 — λ2 & λ3 → 142 — ODN 2 160

120

**FIG. 1**

210

230

250

251

211

221

241

242

260

220

**FIG. 2A**

210

230

250

211

221

241

242

260

261

220

**FIG. 2B**

300

EP 3 076 575 A1

— SP1, λ1
— SP1, λ2
— SP1, λ3
— SP1, λ4

— SP1, λ1
---- SP2, λ2
••••• SP3, λ3
— SP4, λ4

ODN 1

SP 1

—– SP2, λ1
---- SP2, λ2
•••• SP2, λ3
–-- SP2, λ4

Distributor

—·· SP4, λ1
— SP1, λ2
•••• SP2, λ3
–-- SP3, λ4

ODN 2

SP 2

••••• SP3, λ1
—·- SP3, λ2
••••• SP3, λ3
— SP3, λ4

•••• SP3, λ1
—·- SP4, λ2
— SP1, λ3
–-- SP2, λ4

ODN 3

SP 3

330

—·· SP4, λ1
—·· SP4, λ2
—•• SP4, λ3
–- SP4, λ4

— SP2, λ1
•••• SP3, λ2
—•• SP4, λ3
— SP1, λ4

ODN 4

SP 4

Network/Service provider domain | infrastructure provider domain

# FIG. 3

FIG. 4

EP 3 076 575 A1

**FIG. 5**

610

620

630

640

650

660

651 ┆ TUNING ┆

**FIG. 6A**

610

620

630

640

650

660

661 ┆ TUNING ┆

**FIG. 6B**

Europäisches
Patentamt

European
Patent Office

Office européen
des brevets

**EUROPEAN SEARCH REPORT**

Application Number

EP 15 30 5464

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 977 454 A2 (LUCENT TECHNOLOGIES INC [US]) 2 February 2000 (2000-02-02)<br>* paragraphs [0003], [0009] - [0017], [0026] - [0027], [0031] - [0040] *<br>* figures 1,2B, 3 *<br>----- | 1-15 | INV.<br>H04J14/02<br>H04Q11/00 |
| A | US 2011/052189 A1 (YAMADA HIROAKI [US] ET AL) 3 March 2011 (2011-03-03)<br>* paragraphs [0007] - [0008], [0027] - [0030] *<br>* figures 1A,1B,2A,2B *<br>----- | 1-15 | |
| | | | TECHNICAL FIELDS SEARCHED (IPC)<br><br>H04J<br>H04B<br>H04Q |

The present search report has been drawn up for all claims

| Place of search | Date of completion of the search | Examiner |
|---|---|---|
| Munich | 24 August 2015 | Hamer, Jeremy |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 5464

This annex lists the patent family members relating to the patent documents cited in the above-mentioned European search report.
The members are as contained in the European Patent Office EDP file on
The European Patent Office is in no way liable for these particulars which are merely given for the purpose of information.

24-08-2015

| Patent document cited in search report | | Publication date | Patent family member(s) | | Publication date |
|---|---|---|---|---|---|
| EP 0977454 | A2 | 02-02-2000 | CA | 2273410 A1 | 27-01-2000 |
| | | | EP | 0977454 A2 | 02-02-2000 |
| | | | JP | 2000106682 A | 11-04-2000 |
| | | | US | 6067389 A | 23-05-2000 |
| US 2011052189 | A1 | 03-03-2011 | NONE | | |